# EUROPEAN PATENT SPECIFICATION

(11) **EP 3 777 552 B1**
(45) Date of publication and mention of the grant of the patent: **27.11.2024**
(21) Application number: 18919074.7
(22) Date of filing: 26.06.2018
(51) Int. Cl.: A23K 50/40, A23K 40/10, A23K 50/42, A23K 40/30

(54) **PET FOOD, GRANULAR PET FOOD, AND METHOD FOR PRODUCING PET FOOD**
HAUSTIERFUTTER, GRANULIERTES HAUSTIERFUTTER UND VERFAHREN ZUR HERSTELLUNG VON HAUSTIERFUTTER
ALIMENT POUR ANIMAUX DE COMPAGNIE, ALIMENT GRANULAIRE POUR ANIMAUX DE COMPAGNIE ET PROCÉDÉ DE PRODUCTION D'ALIMENT POUR ANIMAUX DE COMPAGNIE

(30) Priority: 18.05.2018 JP 2018096468
(43) Date of publication of application: 17.02.2021
(73) Proprietor: Unicharm Corporation, Shikokuchuo-shi, Ehime 799-0111 (JP)
(72) Inventor: NGUYEN Thi Yen Minh, Itami-shi, Hyogo 664-0831 (JP); USUI Munehiro, Itami-shi, Hyogo 664-0831 (JP); SAWADA Waka, Itami-shi, Hyogo 664-0831 (JP); SHIOTA Masaki, Itami-shi, Hyogo 664-0831 (JP); NOBATA Tadatoshi, Itami-shi, Hyogo 664-0831 (JP)
(74) Representative: Dolleymores
(86) International application number: PCT/JP2018/024189
(87) International publication number: WO 2019/220652

(56) References cited:
- EP-A1- 2 941 965
- JP-A- 2005 538 715
- JP-A- 2015 008 706
- JP-A- 2015 502 750
- JP-B2- 3 821 759
- JP-B2- 5 861 970
- JP-B2- S 641 719
- JP-B2- S6 240 161
- JP-U- 3 108 851
- US-A- 4 822 626
- US-A1- 2011 027 419
- US-A1- 2013 295 227
- US-A1- 2016 302 450
- US-A1- 2018 035 645

## Description

### [Technical Field]

The present invention relates to a pet food, a granular pet food, and a method for producing the pet food.

### [Background Art]

In a pet food, various ideas have been proposed so that pets can enjoy eating, that is, palatability improves.

For example, Patent Literature 1 discloses an animal food including a shell component of a cereal base and a soft internal component including a lipid component, in which palatability is improved by making the animal food into a double structure in which the soft internal component is completely surrounded by the shell component.

### [Citation List] [Patent Literature]

[Patent Literature 1] Japanese Patent No. 4689932

US 2011/027419 A1 discloses a pet food kibble comprising a coloured appearance.

US 2013/295227 A1 relates to a pet supplement composition comprising a sensitive ingredient.

US 2016/302450 A1 discloses an animal feed nutritional supplement having a core material at least partially coated with free fatty acid.

US 4 822 626 A relates to coated canine biscuits.

EP 2 941 965 A1 relates to a coated animal feed.

JP 3 821759 B2 relates to cat food wherein a dried seafood meat is coated with a coating material.

JP 2015 008706 A discloses a pet food having a core part and a covering part.

### [Summary of Invention]

### [Technical Problem]

However, in the animal food described in Patent Literature 1, since the soft internal component is completely surrounded by the shell component, in view of appearance, it is poor in visual change and visual interest cannot be increased. In addition, the food texture at the beginning of chewing is uniform and a change depending on the food texture is poor.

Thus, an object of the present invention is to provide a pet food and a granular pet food having improved palatability by a visual change and changes in texture and taste, and a method for producing the pet food.

### [Solution to Problem]

According to the present invention, there is provided a pet food, a granular pet food and a method for producing pet food as defined in the appended independent claims. Preferred but optional features are set out in the dependent claims. The first embodiment of the invention concerns a pet food including a base substance and a coating part that coats a part of the base substance, in which a part of the base substance is exposed, a component composition of the base substance and a component composition of the coating part are different from each other, the base substance is a puffed granule and both the major axis and the minor axis of the base substance is within the range of 3 to 30 mm, and the coating part has a line shape, the coating part is formed by a coating part-forming composition containing 5% to 70% by mass of vegetable oil and fat, 3% to 40% by mass of extremely hardened oil and fat, 5% to 70% by mass of powder ingredients, and 2.5% to 35% by mass of excipients.

The following features are optional:
A color of the base substance and a color of the coating part are different from each other.

The pet food satisfies at least one condition selected from the group consisting of the following (a) to (d) in a CILAB color space.
(a) ΔL* (L* of coating part - L* of base substance) is 5.0 or more.
(b) ΔE* (color difference between coating part and base substance) is 5.0 or more.
(c) ΔC' (C* of coating part - C* of base substance) is -7.5 to -1.0.
(d) ΔC' (C* of coating part - C* of base substance) is 1.0 to 7.5.

A taste of the base substance and a taste of the coating part are different from each other.

A breaking force of the base substance and a breaking force of the coating part are different from each other.

The breaking force of the coating part is weaker than the breaking force of the base substance.

The base substance has at least one recessed part.

An area proportion of the coating part to a surface area of an entirety of the pet food is 5% to 50%.

The pet food includes a surface having the coating part; and a surface formed by only an exposed portion where the base substance is exposed.

A height from a surface of the base substance to a topmost part of the coating part is 0.1 to 2 mm.

The second embodiment of the invention concerns a granular pet food comprising: a plurality of pet food granules, in which the plurality of pet food granules includes a plurality of the pet foods as described above, and an area proportion of the coating parts to a surface area of an entirety of the plurality of pet food grains is 5% to 50%.

The third embodiment of the invention concerns a method for producing a pet food including a base substance that is a puffed granule in which both the major axis and the minor axis of the base substance is within the range of 3 to 30 mm, and a coating part that coats a part of the base substance and has a line shape, in which the part of the base substance is exposed, and a component composition of the base substance and a component composition of the coating part are different from each other, the method including: a coating step of coating the part of the base substance with a coating part-forming composition having a composition different from a composition of the base substance using a decorator and forming a coating part having a line shape; and a solidifying step of solidifying the coating part-forming composition, wherein the coating part-forming composition contains 5% to 70% by mass of vegetable oil and fat, 3% to 40% by mass of extremely hardened oil and fat, 5% to 70% by mass of powder ingredients, and 2.5% to 35% by mass of excipients.

### [Advantageous Effects of Invention]

According to the present invention, a pet food and a granular pet food having improved palatability by a visual change and changes in texture and taste, and a method for producing the pet food are provided.

### [Brief Description of Drawings]

Fig. 1A shows an example of a pet food according to a first embodiment of the present invention.
Fig. 1B shows an example of the pet food according to the first embodiment of the present invention.
Fig. 2 shows an example of a granular pet food according to a second embodiment of the present invention.
Fig. 3 shows a base substance used in an example of the present invention.

### [Description of Embodiments]

In the present specification, the term "pets" indicates animals that have been bred by people. In a narrower sense, pets are animals being cared for by their owners. Further, the term "pet food" indicates feed for pets. The pet food of the present invention can be sold as "animal feed" or "animal food".

### [Breaking (hardness) measurement method]

In the present specification, a breaking force (breaking hardness) of a pet food is indicated by a value obtained by the following measurement method.

A breaking force when the pet food is compressed at a constant compression speed is measured under the following conditions, using a compression tester (texture analyzer, model number: EZ-SX, manufactured by Shimadzu Corporation).

Plunger: cylindrical plunger with a diameter of 15 mm and a thickness of 5 mm, platform: saucer deeply dug in an asterisk shape (an inner diameter about 33 mm × a depth about 4 mm), compression speed: 60 mm/min, lowest point of the plunger: 4 mm (compression distance), and a measurement temperature: 25°C.

Specifically, one pet food to be measured is placed on the saucer, and a test force is measured while vertically pressing the plunger from directly above at a constant speed. A peak value (maximum value) of the test force is read as the breaking force value. The measurement is repeated for 10 pieces to obtain an average value. In a case where the pet food breaks during the measurement, the measurement of the pet food is finished at that time.

The breaking force (unit: kgw) measured by the compression tester is multiplied by 9.8 so that a unit thereof is converted to Newton (N).

### [Color measurement]

In the present specification, a color of each of the base substance and the coating part of pet food is indicated by a value obtained by the following measurement method.

The colors of the base substance and the coating part are measured using a colorimetric color difference system ZE6000 (manufactured by Nippon Denshoku Industries Co., Ltd.).

The base substance is uniformly pulverized using a Millser (manufactured by Iwatani Corporation) to obtain a measurement sample.

The coating part is heated to 70°C so as to dissolve a coating part composition, then poured in a measurement container, allowed to stand at normal temperature for 1 hour to solidify and obtain a measurement sample.

A measurement sample is put in the amount of about 80% into a measurement container with a capacity of 10 mL, and each coordinate value in the CIELAB color space is measured at three points according to the manual included with the device. Each data is obtained by the following formula.
ΔL*: Coating part (L*) - Base substance (L*)
Δa*: Coating part (a*) - Base substance (a*)
Δb*: Coating part (b*) - Base substance (b*)
ΔE*: {(ΔL*)² + (Δa*)² + (Δb*)²}^{1/2}
C*= {(a*)² ₊ (b*)²}^{1/2}
ΔC*: Coating part (C*) - Base substance (C*)

### [Measurement of area proportion of coating part]

In the present specification, the area proportion of the coating part of the pet food is indicated by a value obtained by the following measurement method (1) or (2).

### <<Measurement method (1)>>

The area proportion of the coating part is measured by image analysis using a visual analyzer.

Specifically, the pet food (in a case of the granular pet food, a predetermined amount (for example, about 50 g) of the pet food granules) is placed in a measurement area on a plane (in a case of the granular pet food, scattered randomly irrespective of front and back) and color composition analysis data about a surface part is acquired. From the data obtained by analyzing the composition of each color for the entirety, a color having a color difference (ΔE*) of 13.0 or less with respect to a central color of the coating part is analyzed as the color of the coating part, and the area proportion of the coating part with respect to the entire pet food is calculated as a percentage.

### <<Measurement method (2)>>

The pet food is observed and photographed with an optical microscope (VHX-900F (manufactured by KEYENCE)), and the area proportion of the coating part is measured.

Specifically, the pet food (in the case of granular pet food, one pet food granule) is observed by an optical microscope, and an image of a surface having the coating part is acquired. Based on the image, a surface area of the entire pet food and an area of the coating part are measured, and the area proportion of the coating part to the entire pet food is calculated as a percentage.

### [Method of measuring major axis, minor axis, and thickness of pet food granule]

In the present specification, regarding an average major axis of the pet food granule, in a case where the pet food granule placed on a horizontal table is viewed from above, major axes and minor axes thereof are measured with a caliper, and average values thereof are taken as the average major axis and an average minor axis. In addition, regarding a thickness of the pet food granule, a thickness from a lower surface (lower end) to an upper surface (upper end) of the pet food granule placed on a horizontal table is measured.

### <Pet food>

The pet food according to a first embodiment of the present invention is a pet food including the base substance and the coating part that coats a part of the base substance, in which a part of the base substance is exposed and a component composition of the base substance and a component composition of the coating part are different from each other.

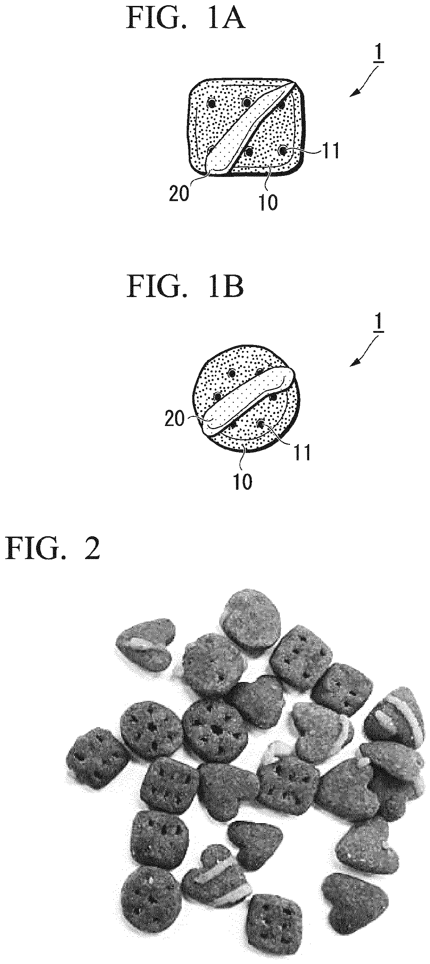

Figs. 1A and 1B are views showing an example of the pet food according to the present embodiment. In Fig. 1A, a part of a base substance 10 having a square shape is coated with a coating part 20. In Fig. 1B, a part of the base substance 10 having a round shape is coated with the coating part 20. Each of the base substances 10 of Figs. 1A and 1B has a recessed part 11.

### «Base substance»

The shape of the base substance is a granular shape. Examples of a sectional shape of the base substance include a circle, an ellipse, a polygon (such as a triangle, a quadrangle, a pentagon, a hexagon, a rhombus, and a trapezoid), a star shape, and a heart shape, but are not limited thereto. Examples of the shape of the granule include a circle, an ellipse, a quadrangle, a heart shape, a star shape, a cross shape, a donut shape, and a clover shape, but are not limited thereto.

The size of the base substance is not particularly limited as long as the pet can easily eat. As the size of the pet food granule, both the major axis and the minor axis are within the range of 3 to 30 mm, preferably 6 to 16.5 mm, and more preferably 8 to 12 mm. The thickness of the pet food granule is preferably, for example, 2 to 8 mm, and more preferably 3 to 6 mm.

In addition, the base substance may have at least one recessed part. The disposition, the shape, and the number of recessed parts are not particularly limited, and any disposition, any shape, and any number can be adopted. When the base substance has the recessed part, the coating part is prevented from being peeled off. The recessed part may be a through-hole or a non-through-hole. Examples of the shape of the recessed part include a circle, an ellipse, a polygon (such as a triangle, a quadrangle, a pentagon, a hexagon, a rhombus, and a trapezoid), and a groove shape. The number of recessed parts is, for example, 1 to 10, 2 to 8, or 4 to 6. In a case where there are a plurality of recessed parts, an example of the disposition thereof includes a lattice shape, a grid shape, a radial shape, and a circular shape.

For the base substance, known ingredients of pet food can be appropriately used. The base substance can be obtained, for example, by heating and forming a mixture of the ingredients, obtained by mixing the powder ingredient and the liquid ingredients. The base substance is a puffed granule. The term "puffed granule" indicates a granule obtained by forming a mixture of the ingredients into a granular shape and also indicates a granule obtained by performing a puffing step of foaming inside the mixture of the ingredients. The term "puffing step" indicates a step of generating a gas in the mixture of the ingredients using a technique of carrying out heating, fermentation, a chemical reaction, or pressure reduction. In the puffing step, as a gas is generated, the volume of the mixture of the ingredients is increased so as to have porous properties. Further, as the volume of the mixture of the ingredients is increased, the bulk density thereof is decreased. Before or after the puffing step, or at the same time as the puffing step, the "puffed granule" is obtained by forming the mixture of the ingredients in a granular shape. The "non-puffed granule" indicates a granule produced without performing the puffing step.

Examples of the powder ingredient include, as a main ingredient, a powder of cereals (such as corn, wheat, rice, corn gluten meal, wheat bran, bread crumbs, barley, buckwheat, and rye), potatoes (such as sweet potatoes and potatoes), beans (such as round soybeans and defatted soybeans), starches (such as wheat starch, corn starch, rice starch, potato starch, tapioca starch, sweet potato starch, sago starch, and modified starch), meats (livestock such as chicken, beef, pork, and venison; liver, beef muscle, pork ears, chicken fillet, and the like, which represent part thereof; chicken meal, pork meal, beef meal, mixed meal of these, meat extract, and the like, which are processed product thereof), seafoods (such as fish such as tuna, bonito and horse mackerel; crustaceans such as shrimp and crab; molluscs such as octopus and squid; shellfish such as scallops and turban shells; fish meal, fish extract, Katsuobushi, and the like, which are processed product thereof; and small fish whitebait, and the like, which represent a form thereof; a white fish and the like, which represents a quality thereof; and tuna Chiai and the like, which represent a part thereof), vegetables, seeds, mushrooms, fruits, algae, eggs, sugars, milks, and others (herbs, yeast, cellulose, and the like), and, as additives, vitamins, inorganic salts, amino acids, acidulants, seasonings, flavors, coloring agents, preservatives, emulsifiers, and antioxidants.

Examples of the liquid ingredients include water, oils and fats, sugars (such as liquid sugar), humectants, preservatives, and emulsifiers. The humectant and the emulsifier may be added in a state of aqueous solution.

The oil and fat may be vegetable oil and fat or animal oil and fat. It is preferable to use animal oil and fat from the viewpoint that high palatability is easily obtained. Preferred examples of the animal oil and fat include chicken oil, hog fat (lard), beef tallow (vet), and milk fat.

As a mixing example of the base substance, a total of 20% to 70% by mass of cereals, a total of 10% to 50% by mass of meat, a total of 0% to 30% by mass of seafood, a total of 0% to 10% by mass of vitamins, minerals, and amino acids, 0% to 15% by mass of cellulose powder, and 1% to 20% by mass of animal oil and fat may be used.

### <<Coating part>>

The coating part coats a part of the base substance and has a component composition different from that of the base substance.

The coating part does not coat the entire base substance, and a part of the base substance is exposed. When including the coating part having a component composition different from that of the base substance, a visual change, a texture change, and a taste change are imparted to the pet food.

The area proportion of the coating part to the surface area of the entire pet food is not particularly limited, and is, for example, 5% to 50%, preferably 5% to 30%, and more preferably 5 to 25%. More specifically, in a case where the method described in "[Measurement of area proportion of coating part] or <<Measurement method 1»" is used, the area proportion of the coating part to the surface area of the entire pet food is, for example, 5% to 50%, preferably 5% to 30%, more preferably 5% to 25%, and further preferably 7% to 15%. In addition, in a case where the method described in "[Measurement of area proportion of coating part] or (Measurement method 2)" is used, the area proportion of the coating part to the surface area of the entire pet food is, for example, 5% to 50%, preferably 5% to 40%, more preferably 8% to 30%, and further preferably 10% to 25%. In the case of granular pet food, the area proportion of the coating part of a plurality (for example, about 2 to 10) of pet food granules is calculated using the method described in "[Measurement of area proportion of coating part] or <<Measurement method 2», and an average thereof may be obtained as the area proportion of the coating part.

Further, the pet food according to the present embodiment may include a surface having the coating part and a surface formed by only an exposed portion where the base substance is exposed. In this case, when the surface having the coating part and the surface formed by only the exposed portion are sandwiched between the teeth of the pet, in the surface having the coating part, the teeth enter the coating part first, and then enter the base substance. Therefore, it is possible to impart a different texture depending on a chewing depth. That is, it is possible to provide a pet food having different textures depending on a region in a depth direction of chewing (beginning of chewing to end of chewing).

A height of the coating part is not particularly limited. The height from the surface of the base substance to the topmost part of the coating part is, for example, 0.1 to 2 mm, and preferably 0.5 to 2 mm. By setting the height of the coating part to be equal to or higher than the lower limit value of the range, the texture of the coating part can be provided at the beginning of chewing. Also, by setting the height of the coating part to be equal to or lower than the upper limit value of the range, peeling of the coating part is suppressed.

The shape of the coating part is a line shape from the viewpoint of production efficiency. For example, the pet food is granular, and the coating part may be formed so as to cross or longitudinally cross the pet food granule.

The color of the coating part is preferably different from the color of the base substance. As a result, a change in appearance is imparted to the pet food, which can be interesting to pets. It is preferable that the difference in colors between the coating part and the base substance be to a degree recognizable by pets. For example, it is preferable to satisfy at least one condition selected from the group consisting of the following (a) to (d) in the CILAB color space.
(a) ΔL* (L* of coating part - L* of base substance) is 5.0 or more.
(b) ΔE* (color difference between coating part and base substance) is 5.0 or more.
(c) ΔC* (C* of coating part - C* of base substance) is -7.5 to -1.0.
(d) ΔC* (C* of coating part - C* of base substance) is 1.0 to 7.5.

The colors of the coating part and the base substance more preferably satisfy two or more of (a), (b), and (c) or (d), and further preferably satisfy three of (a) to (c), or three of (a), (b), and (d). The ΔL* is preferably 7 or more, more preferably 8 or more, and further preferably 9 or more. The range of ΔL* is, for example, 5 to 15, preferably 7 to 13, more preferably 8 to 12, and further preferably 9 to 11. The ΔE* is preferably 7 or more, more preferably 8 or more, and further preferably 9 or more.

The range of ΔE* is, for example, 5 to 18, preferably 7 to 15, more preferably 8 to 13, and further preferably 9 to 12. The ΔC* is, for example, preferably -7.0 to -1.5, more preferably -6.0 to -2.0, and further preferably -5.0 to -3.0. Alternatively, the ΔC* is, for example, preferably 1.5 to 7.0, more preferably 2.0 to 6.0, and further preferably 3.0 to 5.0. When the ΔC* is in the range of -7.5 to -1.0, the coating part is visually recognized as a paler color than that of the base substance. When the ΔC* is in the range of 1.0 to 7.5, the coating part is visually recognized as a lighter color than that of the base substance.

The breaking force (hardness) of the coating part is preferably different from the breaking force of the base substance. Accordingly, a change in texture of the pet food is imparted. The breaking force of the coating part is preferably lower than the breaking force of the base substance. As a result, in a case where the coating part of the pet food is chewed, the teeth easily enter the coating part and a soft texture is felt, and in a case where an exposed portion of the base substance of the pet food is chewed, a hard texture is felt.

That is, it is possible to provide a pet food having different textures depending on a region in a plane direction of chewing. Also, when the chewing depth is shallow (such as beginning of chewing), the texture is soft and the teeth easily enter the granule, and when chewing deeply, a hard texture can be felt. That is, it is possible to provide a pet food having different textures depending on a region in a depth direction of chewing (beginning of chewing to end of chewing).

A taste of the coating part is preferably different from a taste of the base substance. Accordingly, a change in the taste of the pet food is imparted. That is, it is possible to provide a pet food having different tastes depending on a region in a plane direction of chewing. It is possible to provide a pet food having different tastes depending on a region in a depth direction of chewing (beginning of chewing to end of chewing).

The coating part has a component composition different from that of the base substance, and a known ingredient for a pet food can be appropriately used. The coating part contains oil and fat and a powder ingredient. Examples of the composition for forming the coating part include a creamy composition. For example, oil and fat, a powder ingredient, and an optional ingredient such as an appropriate excipient may be mixed and stirred at about 40°C to 60°C to obtain a creamy composition, which may be used as a coating part-forming composition. The coating part can be formed, for example, by coating a part of the base substance with the creamy composition, cooling and solidifying.

The oil and fat is vegetable oil and fat. Also, hardened oil and fat is used.

As the oil and fat, for example, those having a high melting point (approximately 45°C to 65°C and preferably approximately 56.5°C to 60.5°C) and those having a low melting point (approximately 20°C to 45°C and preferably approximately 30°C to 40°C) are preferably used in combination. In a case where only those having the high melting point are used, it is difficult to dissolve or decompose the oil and fat in the body when ingested. On the other hand, when only those having the low melting point are used, there are concerns that processability is poor and the oil and fat will melt when the temperature is high. When those having the high melting point and those having the low melting point are used in combination, it is possible to obtain a composition that has good processability and is easily dissolved when eaten. Examples of such a combination include a combination of vegetable oil and fat and hardened oil and fat. Alternatively, refined beef tallow, refined pork tallow, chicken tallow, sheep tallow, horse tallow, palm fractionated oil, palm kernel oil, vegetable oil and fat, fish oil, fatty acids (such as linoleic acid and linolenic acid), butter, and the like may be used together with the vegetable oil and fat. Preferred examples of the vegetable oil and fat include palm oil. The hardened oil and fat may be vegetable or animal. The hardened oil and fat is an extremely hardened oil and fat (melting point of 56.5°C to 60.5°C).

The powder ingredient is blended to lower the fluidity of the creamy composition to form a raised coating part. As examples of the powder ingredient, all powder ingredients usable for a pet food can be used without any particular limitation. For example, those exemplified in "<<Base substance>>" above are mentioned. Specific examples thereof include cereals, meat, starches, rice bran, sugars, beans, seafood, eggs, milk, plant protein extracts, fruits, mushrooms, algae, vitamins, minerals, amino acids, cellulose, yeast, flavors, and seasonings.

Preferred examples of the powder ingredient include soybean powder. Among these, concentrated soy protein is preferable, and those obtained by being heat treated in consideration of digestion are more preferable. In addition, pregelatinized wheat flour, separated soy protein, protein hydrolyzate, brewer's yeast powder, cheese powder, milk powder, seafood powder, amino acid powder, meat, beans, rice flour, malt powder, nucleic acid, and the like may be used instead of the soybean powder or together with the soybean powder. It is preferable to use a powder ingredient that is compatible with the oil and fat. The pulverized particle size of the powder ingredient is not particularly limited, but the maximum pulverized particle size is preferably 400 µm or smaller, and the average pulverized particle size is more preferably 100 µm or smaller.

In addition to the above, a freeze-dried ingredient may be used as the ingredient of the coating part-forming composition, from the viewpoint of improving the appearance or palatability. The freeze-dried ingredient may be sprinkled onto the creamy composition, for example, after coating the base substance with the creamy composition and before solidifying.

The coating part-forming composition contains a total of 5% to 70% by mass of vegetable oil and fat having the low melting point, a total of 3% to 40% by mass of extremely hardened oil and fat having the high melting point, a total of 5% to 70% by mass of powder ingredients, and a total of 2.5% to 35% by mass of excipients (such as dextrin, starches, monosaccharides, and oligosaccharides).

A ratio of the mass of the coating part to the total mass of the entire pet food is not particularly limited, and is, for example, 1% to 20% by mass, preferably 3% to 15% by mass, and more preferably 5% to 12% by mass.

The pet food according to the present embodiment can be suitably used as, for example, a pet food for cats. Since the pet food according to the present embodiment includes the coating part that coats a part of the base substance and the exposed portion where the base substance is exposed, there is a change in appearance, and a different texture or taste depending on the chewing position or the chewing depth is provided. Due to these changes in appearance, texture, and taste, a pet food with improved palatability is provided.

### <Granular pet food>

A granular pet food according to a second embodiment of the present invention includes a plurality of pet food granules, in which the plurality of pet food granules include a plurality of the pet foods according to the first embodiment, and an area proportion of the coating parts to a surface area of an entirety of the plurality of the pet food granules is 5% to 50%.

In the present specification, the "granular pet food" refers to a pet food including the plurality of pet food granules. The granular pet food according to the present embodiment includes a plurality of granular pet foods among the pet food according to the first embodiment. That is, at least some of the pet food granules forming the granular pet food according to the present embodiment are pet food granules each having the coating part that coats a part of the base substance.

Among the pet food granules forming the granular pet food, a proportion of the pet food granules each having the coating part is not particularly limited, and is, for example, 20% or more, preferably 30% or more, more preferably 50% or more, and further preferably 60%. An upper limit of the proportion of those each having the coating part is not particularly limited, and the proportion of those each having the coating part may be 100%.

The granular pet food according to the present embodiment can include a pet food granule (only the base substance) having no coating part, except for those each having the coating part.

In the granular pet food according to the present embodiment, the area proportion of the coating parts to a surface area of the entirety of the pet food granule forming the granular pet food is 5% to 50%. The area proportion of the coating part can be measured by the method described in "[Measurement of area proportion of coating part] <<Measurement method 1>>", using some or all of the pet food granules forming the granular pet food. The amount of the pet food granules to be used for the measurement is, for example, a predetermined amount of 50 g. The area proportion of the coating part to the surface area of the entirety of the pet food granules forming the granular pet food is preferably 5% to 30%, more preferably 5% to 25%, and further preferably 7% to 15%.

The ratio of the total mass of the coating part to the total mass of the entire granular pet food is not particularly limited, and is, for example, 1% to 20% by mass, preferably 3% to 15% by mass, and more preferably 5% to 12% by mass.

An example of the granular pet food according to the present embodiment is shown in Fig. 2.

### <Method for producing pet food>

A method for producing a pet food according to a third embodiment of the present invention is a method for producing the pet food including the base substance, and the coating part that coats a part of the base substance, in which a part of the base substance is exposed, and a component composition of the base substance and a component composition of the coating part are different from each other. The method for producing the pet food includes a coating step of coating the part of the base substance with a coating part-forming composition having a composition different from a composition of the base substance; and a solidifying step of solidifying the coating

According to the method for producing a pet food of the present embodiment, it is possible to produce the pet food according to the first embodiment and the granular pet food according to the second embodiment.

The method for producing a pet food according to the present embodiment includes the coating step of coating the part of the base substance with the coating part-forming composition having a composition different from a composition of the base substance, and the solidifying step of solidifying the coating part-forming composition.

### <<Production example of base substance>>

The base substance to be used in the method for producing a pet food according to the present embodiment is a puffed granule. In the following, a production method is exemplified.

### [Granulating step]

In a granulating step, a mixture of ingredients is granulated to obtain pet food granules. Known methods can be used as the method of mixing ingredients to obtain a mixture of the ingredients and the method of forming (granulating) the mixture of the ingredients in a granular shape.

For example, a method for producing the puffed granules using an extruder can be suitably used.

As a method for producing puffed granules using an extruder, for example, a method described in "Small Animal Clinical Nutrition 5th Edition" (edited by Michael S. Hand, Craig D. Thatcher, Rebecca L. Remillard, Philip Roudebusg, and Bruce J. Novotny, published by Mark Morris Associates; 2014; p 209 to 215) or the like can be used.

An example of the method for producing the puffed granules using an extruder will be described. First, among the ingredients of the puffed granules, ingredients other than external additives are pulverized as necessary and mixed. The ingredients may be mixed while being pulverized using a grinder or the like. Further, water (which is not included in the ingredient composition) is added thereto as necessary to obtain a mixture of the ingredients.

The obtained mixture of the ingredients is put into the extruder, heated, pressed, and then extruded from an outlet. The outlet is provided with a plate in which a hole having a predetermined shape is formed and a cutter for cutting the mixture of the ingredients extruded from the plate to have a predetermined length (thickness). At the same time as the extrusion of the mixture of the ingredients from the hole in the plate and the formation of the mixture in a predetermined shape by cutting the mixture using a cutter, the mixture of the ingredients is released to atmospheric pressure from the pressurized state so that water vapor in the mixture of the ingredients expands, and the mixture of the ingredients is puffed, thereby obtaining porous granules.

### [Drying step]

The granules to be obtained in the above-described manner are dried as necessary until a predetermined moisture content is obtained to obtain puffed granules (food granules). In a case where dry type food granules are produced, the drying step is indispensable.

For example, the moisture content of granules to be discharged from the extruder is 10% to 20% by mass. In a case where the granules have such a water content, excellent formability is likely to be obtained.

The temperature of granules to be discharged from the extruder depends on the heating temperature in the extruder. For example, the temperature thereof may be 90°C to 150°C.

As the method of drying the granules discharged from the extruder, a known method can be appropriately used. Examples of the known method include a hot air drying method of drying granules by blowing hot air to the granules; a vacuum drying method; and a method of frying granules in oil. For example, a hot air drying method using a conveyor type hot air dryer is preferable.

The drying conditions (the temperature and the time) may be conditions capable of increasing the temperature of granules to 100°C or higher to evaporate the moisture in the granules without thermal denaturation of the components of the granules and adjusting the moisture content of the granules to a desired value.

For example, in a case where the granules are dried by a hot air dryer, the temperature of the hot air coming into contact with the granules is preferably in a range of 100°C to 140°C and more preferably in a range of 100°C to 110°C. The drying time is not particularly limited, and the granules are dried for approximately 5 to 20 minutes.

The pet food may be further coated with a coating agent containing crude beef tallow, a seasoning, or a flavoring agent after being dried.

The coating method is not particularly limited, and the pet food can be coated according to a vacuum coating method.

The vacuum coating method is a method of reducing the pressure in a state in which the heated food granules and the coating agent are in contact with each other or adhere to each other and slowly releasing the food granules to the atmosphere. The coating agent may be in a liquid or powder state. By coating the food granules with the coating agent, the palatability (biting property) for a pet can be improved.

### <<Production of coating part-forming composition>>

A production method in a case where the coating part-forming composition is the creamy composition is exemplified below.

First, oil and fat components are put into a cylindrical pot or the like and mixed, and heated to 50°C to 70°C (preferably about 65°C) (oil and fat component mixture). Also, ingredients other than the oil and fat component are mixed (powder ingredient mixture). Next, while adding the powder ingredient mixture to the oil and fat component mixture, the mixture is stirred for about 10 to 15 minutes with a Homo disper or a homogenizer. During stirring, it is preferable to maintain the temperature at 55°C or higher (preferably about 60°C). In this manner, a creamy coating part-forming composition can be obtained. After the stirring, the coating part-forming composition may be filtered using a sieve (for example, opening 650 to 800 µm). The coating part-forming composition can be stored in a heat-retaining tank kept at 40°C to 70°C.

### <<Coating step>>

The coating step is a step of coating a part of the base substance with the coating part-forming composition. The coating step is performed using a decorator. For example, the part of the base substance can be coated with the coating part-forming composition by discharging the coating part-forming composition from above to the base substance transported by the conveyor, with a decorator. A nozzle diameter of the decorator may be appropriately adjusted according to the size of the base substance, and examples thereof include approximately ϕ 0.5 to 2 mm (for example, approximately ϕ 0.75 mm). Moving of the nozzle of the decorator is not particularly limited, and the nozzle of the decorator may move to an ellipse direction with respect to an advancing direction of the conveyor, from the viewpoint of coating efficiency. During discharging of the coating part-forming composition, it is preferable that the vicinity of a discharge part of the decorator be kept at 40°C to 70°C.

The coating part is formed only on an upper surface of the base substance by discharging the coating part-forming composition from above to the base substance. After forming the base substance on the upper surface of the base substance, the base substance is reversed and the coating part-forming composition is discharged to a back surface of the base substance. Accordingly, the coating part can also be formed on the back surface of the base substance.

### <<Solidifying step>>

The solidifying step is a step of solidifying the coating part-forming composition. The coating part-forming composition can be solidified, for example, by cooling. For the cooling, a temperature may be lowered to a solidification temperature of the coating part-forming composition, and is, for example, 30°C to 40°C or lower. The coating part-forming composition can be solidified even at room temperature, but in order to shorten the time until the solidification, cooling may be performed by a spot cooler or the like.

In this manner, the pet food according to the first embodiment or the granular pet food according to the second embodiment can be manufactured.

### << Optional step>>

The production method according to the present embodiment may include an optional step in addition to the coating step and the solidifying step. Examples of the optional step include a connection-breaking step.

The connection-breaking step is a step of breaking a chunk of pet food joined by the coating part-forming composition. The connection-breaking can be performed by applying an impact to the base substance. A method of applying the impact is not particularly limited, and examples thereof include a method of loosening the connection using a ladder chute or the like and a method of applying vibration. The connection-breaking step may be performed after the coating step and before the solidifying step, after the solidifying step, or before and after the solidifying step.

### [Examples]

The present invention will be described in more detail with reference to the following examples, but the present invention is not limited to these examples. Hereinafter, "%" indicates "% by mass" unless otherwise noted.

### <Palatability evaluation method (1)>

The palatability was evaluated by a method of comparing food consumption of the combination of a pet food B and a pet food A. The test was conducted for 2 days using a predetermined number of cats as a monitor.

On the first day, one of the pet foods A and B is fed from the left and the other from the right at the same time with a predetermined feeding amount for one cat. When the cat has completely eaten one or the other or after one hour, the amount of pet food that the cat ate was measured.

From the total weight of the pet food that one cat ate on the first day, the food consumption of the pet food B and the food consumption of the pet food A were calculated as a percentage. The percentages obtained were averaged based on the number of cats monitored to obtain results on Day 1.

On the second day, in the pet foods A and B, contrary to the first day, one was given from the right and the other was given from the left at the same time. One cat was fed with the same amount of feeding as on the first day, and the amount of the pet food consumed by the cat was measured when the cat completely ate one or after one hour.

The result of the second day was obtained by the same calculation method as that of the first day.

Finally, the results of the first day and the second day were averaged, and the final result, a ratio of the food consumption of pet food A : pet food B "numerical value A:numerical value B" (palatability) was determined. The higher the numerical value of the palatability, the more preferable that the cat as a monitor eats.

### <Palatability evaluation method (2)>

For users of pet foods for cats, the palatability of pet foods consumed by domestic cats was evaluated for pet foods A and B, and a questionnaire survey was conducted on the palatability. Tests were conducted on a predetermined number of users for 5 days with the pet food A and 5 days with the pet food B, for a total of 10 days.

Groups were divided into a group in which domestic cats evaluated the pet food A first and then the pet food B and a group in which domestic cats evaluated the pet food B first and then the pet food A, a ratio "numerical value A: numerical valve B" of users who evaluated that the palatability of the pet food A was higher : a ratio of users who evaluated that the palatability of the pet food B was higher was obtained.

### <Compression test (measurement of breaking force)>

A breaking force when the granular pet food was compressed at a constant compression speed was measured under the following conditions, using a compression tester (texture analyzer, model number: EZ-SX, manufactured by Shimadzu Corporation).

Plunger: cylindrical plunger with a diameter of 15 mm and a thickness of 5 mm, platform: saucer deeply dug in an asterisk shape (an inner diameter about 33 mm × a depth about 4 mm), compression speed: 60 mm/min, lowest point of the plunger: 4 mm (compression distance), and a measurement temperature: 25°C.

That is, one granular pet food to be measured was placed on the saucer, and a test force is measured while vertically pressing the plunger from directly above the granule at a constant speed. A peak value (maximum value) of the test force is read as the value of breaking force value. The measurement is repeated for 10 granule to obtain an average value. In a case where the granule is broken during the measurement, the measurement of the granule is finished at that point. For the pet foods each having a coating part with cream, the area having the coating part is measured.

The breaking force (unit: kgw) measured by the compression tester is multiplied by 9.8 so that a unit thereof is converted to Newton (N).

### [Production Example 1]

### (Production of base substance)

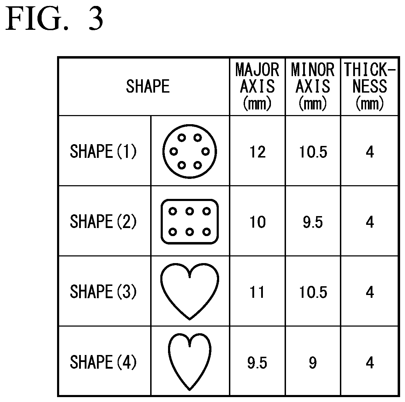

The ingredients of the base substance were mixed in the formulation shown in Table 1. The obtained mixture of the ingredients was put into an extruder and heat-treated at approximately 115°C for approximately 2 minutes while kneading to pregelatinize starch components, and extruded and granulated into a granular shape at an outlet of the extruder and puffed at the same time. At the outlet of the extruder, kneaded matter was extruded into a column shape from the hole having the shape shown in Fig. 3, and the columnar matter was cut with a cutter so as to have a thickness of 4 mm to obtain granular matter.

The obtained granular matter was dried at approximately 100°C for 5 to 20 minutes using a dryer, and then coated with an external additive (1.5% oil coating) to obtain a base substance which is a dry type puffed granule.

**[Table 1]**

| Ingredient | Mass (%) |
|---|---|
| Cereals | 39.4% |
| Meats | 39.2% |
| Seafoods | 3.8% |
| Yeasts | 3.2% |
| Vitamins, minerals, and amino acids | 3.6% |
| Animal oil and fat | 10.8% |

### (Decoration with cream)

A cream ingredient was mixed in the formulation shown in Table 2. Vegetable oil and fat and hardened oil and fat were put into a cylindrical pot and warmed to 65°C (Mixture 1). Soy protein and dextrin were mixed (Mixture 2).

While adding the mixture 1 and the mixture 2, the mixture was stirred with a Homo disper (Auto Mixer Model 20, manufactured by Primix Corporation) for 10 to 15 minutes. The obtained mixture was passed through a sieve (opening 710 µm) to obtain a cream. The cream was stored in a storage tank kept at 40°C to 70°C.

**[Table 2]**

| Ingredients | Mass (%) |
|---|---|
| Vegetable oil and fat | 32.6% |
| Hardened oil and fat | 18.6% |
| Soy protein | 37.2% |
| Dextrin | 11.6% |

The cream was put into a decorator, the decorator was reciprocated in an elliptical direction, and the cream was sprinkled on the base substance from above. The decoration was performed such that a ratio of total mass of the entire base substances to total mass of the cream used for decoration (total mass of base substances/total mass of cream) was 93/7. After the decoration, a pet food P1 was obtained by cooling.

### [Production Example 2]

A pet food was produced by the same production method as that of Production Example 1 to obtain a pet food P2, except that the ratio of the total mass of the entire base substances to the total mass of the cream used for decoration (total mass of base substances/total mass of cream) was 90/10.

### [Production of pet food of comparative examples]

### (Comparative Example 1)

A base substance was produced by the method described in Production Example 1 above, and was used as a pet food Z1 of a comparative example without decoration with cream.

### (Comparative Example 2)

A base substance was produced by the method described in Production Example 1 above, and 100% of the surface of the base substance was coated with the cream described in Production Example 1. The coated base substance was used as a pet food Z2 of the comparative example.

### <Color measurement>

Using a colorimetric color difference system ZE6000 (manufactured by Nippon Denshoku Industries Co., Ltd.), colors of the base substance and the cream were measured.

The base substance was uniformly pulverized using a Millser (manufactured by Iwatani Corporation) to obtain a measurement sample.

The cream was heated at 70°C, dissolved, poured into a measurement container, and allowed to stand at room temperature for 1 hour to solidify to obtain a measurement sample.

A measurement sample was put in the amount of about 80% into a measurement container with a capacity of 10 mL, and each coordinate value in the CIELAB color space was measured at three points according to the manual included with the device.

Results are shown in Table 3. Table 3 shows an average value of measurements at three locations.

In Table 3, Chroma (C*) was obtained by C* = {(a*)²+ (b*)²}^{1/2}.

**[Table 3]**

| | Lightness (L*) | '(+) Red (-) Green (a*) | '(+) Yellow (-) Blue (b*) | Chroma (C*) |
|---|---|---|---|---|
| Base substance | 49.50 | 11.22 | 35.57 | 37.30 |
| Cream | 58.78 | 8.72 | 32.36 | 33.52 |

In addition, a difference in the chroma of the cream with respect to the base substance was determined by the following calculation formula. The results are shown in Table 4.
ΔL*: Cream (L*) - Base substance (L*)
Δa*: Cream (a*) - Base substance (a*)
Δb*: Cream (b*) - Base substance (b*)
ΔE*: {(ΔL*)² + (Δa*)² + (Δb*)²}^{1/2}
ΔC*: Cream (C*) - Base substance (C*)

**[Table 4]**

| Lightness (ΔL*) | '(+) Red (-) green (Δa*) | '(+) Yellow(-) Blue (Δb*) | Color difference (ΔE*) | Chroma (ΔC*) |
|---|---|---|---|---|
| 9.28 | -2.50 | -3.21 | 10.13 | -3.78 |

From the results shown in Table 4, it was confirmed that the cream and the base substance had different colors. In the examples above, ΔC was a negative value, and the cream was visually recognized as a paler color than the base substance. ΔC may have a positive value, and in this case, the cream was visually recognized as a lighter color than the base substance.

### <Measurement (1) of area proportion of coating part>

The cream-coated area proportion was measured by image analysis using a visual analyzer, consigning to the Japan Food Analysis Center.

About 50 g of pet food granules was scattered on a measurement area on the plane, and color composition analysis data of the surface portion was acquired. From the data obtained by analyzing the composition of each color with respect to the entirety, a color having a color difference (ΔE*) with respect to the central color of the cream of 13.0 or less was analyzed as the color of the cream, and the coating area proportion of the cream was obtained. The results are shown in Table 5.

**[Table 5]**

| | Total mass of base substance/ Total mass of cream | Cream-coated area proportion (%) |
|---|---|---|
| Pet food P1 | 93/7 | 8.06 |
| Pet food P2 | 90/10 | 9.65 |

### <Measurement (2) of area proportion of coating part>

The pet food is observed and photographed with an optical microscope (VHX-900F (manufactured by KEYENCE)), and a cream-coated area proportion was measured.

Specifically, the pet food granule having a cream coating part was observed by an optical microscope, and an image of a surface having the cream was acquired. Based on the image, a surface area of the entire pet food granules and a cream-coated area were measured, and the cream-coated area proportion to the entire pet food granules was calculated as a percentage. The results are listed in Table 6. The cream-coated area proportion shown in Table 6 is an average value of three pet food granules.

**[Table 6]**

| | Total mass of base substance/ Total mass of cream | Cream-coated area proportion (%) |
|---|---|---|
| Pet food P1 | 93/7 | 16.7 |
| Pet food P2 | 90/10 | 23.8* |

| | | |
|---|---|---|
| *Calculated value based on measurement value of pet food P1 | | |

### <Palatability evaluation>

### (Test Example 1)

For the pet food P2 produced in Production Example 2, the palatability (biting) was evaluated by the palatability evaluation method (1).

The pet food P2 was used as the pet food A, and the pet food of Comparative Example 1 was used as the pet food B. Although the cat species as the monitor is not specified, each adult cat had a feeding amount of 40 g and the number of cats was 20. The results are shown in Table 7.

### (Test Example 2)

The pet food of Comparative Example 1 was used as the pet food A, and the pet food Z2 of Comparative Example 2 was used as the pet food B. Although the cat species as the monitor is not specified, each adult cat had a feeding amount of 40 g and the number of cats was 10. The results are shown in Table 7.

### (Test Example 3)

For the pet food P1 produced in Production Example 1, the palatability (biting) was evaluated by the palatability evaluation method (2).

The pet food P1 was used as the pet food A, and a commercial product A [granular pet food including pet food granules obtained by filling a cereal-based outer shell with cream; Sheba (registered trademark), Duo (registered trademark)] was used as the pet food B. The number of users was 70. The results are shown in Table 7.

**[Table 7]**

| | | |
|---|---|---|
| Test Example 1 | Pet food P2:Pet food Z1 | 57:43 |
| Test Example 2 | Pet food Z1:Pet food Z2 | 84:16 |
| Test Example 3 | Pet food P1:Commercial product A | 58:42 |

As shown in the results of Table 7, the pet food P2 had improved palatability as compared to the pet food including only the base substance (Test Example 1). Since the pet food had the more improved palatability as compared to the pet food Z2 in which the base substance was coated 100% with cream (Test Example 2), the pet food P2 was estimated to have a higher palatability than that of the pet food Z2.

In addition, the pet food P1 had improved palatability as compared to a commercial product in which a cereal-based outer shell was filled with cream (Test Example 3).

### <Evaluation of hardness>

For the pet food P1 produced in Production Example 1, the pet food in Comparative Example 1, the commercial product A [granular pet food including pet food granules obtained by filling a cereal-based outer shell with cream; Sheba (registered trademark), Duo (registered trademark)], and a commercial product B [granular pet food including cereal-based puffed granules], breaking force was measured by the compression test (measurement of the breaking force) to evaluate the hardness. The results are listed in Table 8.

**[Table 8]**

| | Average value (N) | Maximum value (N) | Minimum value (N) |
|---|---|---|---|
| Pet food P1 (N=80) | 55.7 | 88.4 | 28.2 |
| Pet food Z1 (N=80) | 48.8 | 68.8 | 33.1 |
| Commercial product A (N=10) | 20.4 | 31.1 | 15.6 |
| Commercial product B (N=10) | 71.7 | 99.8 | 53.9 |

As shown in the results of Table 8, it was confirmed that the pet food P1 had a wider hardness range from the minimum value to the maximum value and gave various textures as compared to the pet food Z2 and the commercial product. In addition, the pet food P1 had a texture harder than that of the commercial product A and had a texture less hard than that of the commercial product B, and it was confirmed that the pet food P1 had improved hardness to be easy to eat.

In the pet food P1 produced in Production Example 1, the pet food of Comparative Example 1, the commercial product A, and the commercial product B, a breaking force curve (horizontal axis: plunger displacement amount (mm), and vertical axis: test force (N)) was obtained by the compression test (measurement of the breaking force). In the obtained breaking force curve, an inclination (change amount of breaking force (0 to 5 N)/plunger displacement amount (mm)) of a portion where the test force was from 0 N to 5 N was determined. The results are listed in Table 9.

**[Table 9]**

| | Average value (N/mm) | Maximum value (N/mm) | Minimum value (N/mm) |
|---|---|---|---|
| Pet food P1 (N=80) | 14.3 | 53.8 | 1.5 |
| Pet food Z1 (N=80) | 28.1 | 66.7 | 2.8 |
| Commercial product A (N=10) | 16.2 | 20.7 | 7.6 |
| Commercial product B (N=10) | 16.2 | 25.0 | 6.2 |

As shown in the results of Table 9, it was shown that the pet food P1 tended to have a smaller inclination, as compared to the pet food Z1. This result shows that the cream-coating part of the pet food P1 had a softer texture than that of the base substance. In addition, it was confirmed that the pet food P1 had a wider range from the minimum value to the maximum value than that of the commercial product A and the commercial product B and gave various textures from the beginning of chewing.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A pet food, comprising:
a base substance (10); and
a coating part (20) that coats a part of the base substance (10);
wherein the part of the base substance (10) is exposed,
a component composition of the base substance (10) and a component composition of the coating part (20) are different from each other,
the base substance (10) is a puffed granule and both the major axis and the minor axis of the base substance (10) is within the range of 3 to 30 mm, and
the coating part (20) has a line shape,
the coating part is formed by a coating part-forming composition containing 5% to 70% by mass of vegetable oil and fat, 3% to 40% by mass of extremely hardened oil and fat, 5% to 70% by mass of powder ingredients, and 2.5% to 35% by mass of excipients.

2. The pet food according to Claim 1,
wherein a color of the base substance (10) and a color of the coating part (20) are different from each other.

3. The pet food according to Claim 2,
wherein the pet food satisfies at least one condition selected from the group consisting of the following (a) to (d) in a CILAB color space,
(a) ΔL* (L* of coating part - L* of base substance) is 5.0 or more,
(b) ΔE* (color difference between coating part and base substance) is 5.0 or more,
(c) ΔC* (C* of coating part - C* of base substance) is -7.5 to -1.0, and
(d) ΔC* (C* of coating part - C* of base substance) is 1.0 to 7.5.

4. The pet food according to any one of Claims 1 to 3,
wherein a taste of the base substance (10) and a taste of the coating part (20) are different from each other.

5. The pet food according to any one of Claims 1 to 4,
wherein a breaking force of the base substance (10) and a breaking force of the coating part (20) are different from each other.

6. The pet food according to Claim 5,
wherein the breaking force of the coating part (20) is weaker than the breaking force of the base substance (10).

7. The pet food according to any one of Claims 1 to 6,
wherein the base substance (10) has at least one recessed part (11).

8. The pet food according to any one of Claims 1 to 7,
wherein an area proportion of the coating part (20) to a surface area of an entirety of the pet food is 5% to 50%.

9. The pet food according to any one of Claims 1 to 8, comprising:
a surface having the coating part (20); and
a surface formed by only an exposed portion where the base substance (10) is exposed.

10. The pet food according to any one of Claims 1 to 9,
wherein a height from a surface of the base substance (10) to a topmost part of the coating part (20) is 0.1 to 2 mm.

11. A granular pet food, comprising: a plurality of pet food granules,
wherein the plurality of pet food granules includes a plurality of the pet foods according to any one of Claims 1 to 10, and
an area proportion of the coating parts (20) to a surface area of an entirety of the plurality of pet food granules is 5% to 50%.

12. A method for producing a pet food including a base substance (10) that is a puffed granule in which both the major axis and the minor axis of the base substance (10) is within the range of 3 to 30 mm, and
a coating part (20) that coats a part of the base substance (10) and has a line shape, in which
the part of the base substance (10) is exposed, and
a component composition of the base substance (10) and a component composition of the coating part (20) are different from each other,
the method comprising:
a coating step of coating the part of the base substance (10) with a coating part forming composition having a composition different from a composition of the base substance (10) using a decorator and forming a coating part (20) having a line shape; and
a solidifying step of solidifying the coating part forming composition,
wherein the coating part-forming composition contains 5% to 70% by mass of vegetable oil and fat, 3% to 40% by mass of extremely hardened oil and fat, 5% to 70% by mass of powder ingredients, and 2.5% to 35% by mass of excipients.

## Patentansprüche

1. Haustierfutter, umfassend:
eine Basissubstanz (10); und
einen Beschichtungsteil (20), der einen Teil der Basissubstanz (10) beschichtet;
wobei der Teil der Basissubstanz (10) exponiert ist,
eine Komponentenzusammensetzung der Basissubstanz (10) und eine Komponentenzusammensetzung des Beschichtungsteils (20) sich voneinander unterschieden,
die Basissubstanz (10) ein gepufftes Granulat ist und sowohl die Hauptachse als auch die Nebenachse der Basissubstanz (10) im Bereich von 3 bis 30 mm liegen, und
der Beschichtungsteil (20) eine Linienform aufweist,
der Beschichtungsteil aus einer den Beschichtungsteil bildenden Zusammensetzung gebildet ist, die 5 bis 70 Masseprozent Pflanzenöl und Fett, 3 bis 40 Masseprozent extrem gehärtetes Öl und Fett, 5 bis 70 Masseprozent Pulverinhaltsstoffe und 2,5 bis 35 Masseprozent Hilfsstoffe enthält.

2. Haustierfutter nach Anspruch 1,
wobei eine Farbe der Basissubstanz (10) und eine Farbe des Beschichtungsteils (20) sich voneinander unterscheiden.

3. Haustierfutter nach Anspruch 2,
wobei das Haustierfutter mindestens einem Zustand gerecht wird, der aus der Gruppe bestehend aus den folgenden (a) bis (d) in einem CILAB-Farbbereich ausgewählt ist,
(a) ΔL* (L* des Beschichtungsteils - L* der Basissubstanz) ist 5,0 oder mehr,
(b) ΔE* (Farbdifferenz zwischen dem Beschichtungsteil und der Basissubstanz) ist 5,0 oder mehr,
(c) ΔC* (C* des Beschichtungsteils - C* der Basissubstanz) ist -7,5 bis -1,0 und
(d) ΔC* (C* des Beschichtungsteils - C* der Basissubstanz) ist 1,0 bis 7,5.

4. Haustierfutter nach einem der Ansprüche 1 bis 3,
wobei ein Geschmack der Basissubstanz (10) und ein Geschmack des Beschichtungsteils (20) sich voneinander unterscheiden.

5. Haustierfutter nach einem der Ansprüche 1 bis 4,
wobei eine Bruchkraft der Basissubstanz (10) und eine Bruchkraft des Beschichtungsteils (20) sich voneinander unterscheiden.

6. Haustierfutter nach Anspruch 5,
wobei die Bruchkraft des Beschichtungsteils (20) schwächer ist als die Bruchkraft der Basissubstanz (10).

7. Haustierfutter nach einem der Ansprüche 1 bis 6,
wobei die Basissubstanz (10) mindestens einen ausgesparten Teil (11) aufweist.

8. Haustierfutter nach einem der Ansprüche 1 bis 7,
wobei ein Flächenverhältnis des Beschichtungsteils (20) zu einer Oberfläche einer Gesamtheit des Haustierfutters 5 % bis 50 % beträgt.

9. Haustierfutter nach einem der Ansprüche 1 bis 8, umfassend:
eine Oberfläche mit dem Beschichtungsteil (20); und
eine Oberfläche, die nur von einem exponierten Abschnitt gebildet wird, wobei die Basissubstanz (10) exponiert ist.

10. Haustierfutter nach einem der Ansprüche 1 bis 9,
wobei eine Höhe von einer Oberfläche der Basissubstanz (10) zu einem obersten Teil des Beschichtungsteils (20) 0,1 bis 2 mm beträgt.

11. Haustierfutter-Granulat, umfassend: eine Vielzahl von Haustierfutterkörnchen,
wobei die Vielzahl von Haustierfutterkörnchen eine Vielzahl der Haustierfutter nach einem der Ansprüche 1 bis 10 einschließt, und
ein Flächenverhältnis der Beschichtungsteile (20) zu einer Oberfläche einer Gesamtheit der Vielzahl von Haustierfutterkörnchen 5 % bis 50 % beträgt.

12. Verfahren zur Herstellung eines Haustierfutters, einschließlich einer Basissubstanz (10), die ein gepufftes Granulat ist, in dem sowohl die Hauptachse als auch die Nebenachse der Basissubstanz (10) im Bereich von 3 bis 30 mm liegen, und
eines Beschichtungsteils (20), der einen Teil der Basissubstanz (10) beschichtet und eine Linienform aufweist, in dem
der Teil der Basissubstanz (10) exponiert ist, und
eine Komponentenzusammensetzung der Basissubstanz (10) und eine Komponentenzusammensetzung des Beschichtungsteils (20) sich voneinander unterscheiden,
wobei das Verfahren umfasst:
einen Beschichtungsschritt zur Beschichtung des Teils der Basissubstanz (10) mit einer den Beschichtungsteil bildenden Zusammensetzung, die eine Zusammensetzung aufweist, die sich von einer Zusammensetzung der Basissubstanz (10) unterscheidet, wobei ein Dekorierer verwendet wird und ein Beschichtungsteil (20) mit einer Linienform gebildet wird; und
einen Verfestigungsschritt zur Verfestigung der den Beschichtungsteil bildenden Zusammensetzung,
wobei die den Beschichtungsteil bildende Zusammensetzung 5 bis 70 Masseprozent Pflanzenöl und Fett, 3 bis 40 Masseprozent extrem gehärtetes Öl und Fett, 5 bis 70 Masseprozent Pulverinhaltsstoffe und 2,5 bis 35 Masseprozent Hilfsstoffe enthält.

## Revendications

1. Aliment pour animaux de compagnie, comprenant :
une substance de base (10) ; et
une partie enrobée (20) qui nappe une partie de la substance de base (10) ;
où la partie de la substance de base (10) est exposée,
une composition en termes de composants de la substance de base (10) et une composition en termes de composants de la partie enrobée (20) sont différentes l'une de l'autre,
la substance de base (10) est un granulé soufflé et l'axe majeur et l'axe mineur de la substance de base (10) sont tous deux dans la plage de 3 à 30 mm et
la partie enrobée (20) a une forme linéaire,
la partie enrobée est constituée d'une composition formant la partie enrobée qui contient de 5 % à 70 % en masse d'une huile et d'une graisse végétales, de 3 % à 40 % en masse d'une huile et d'une graisse extrêmement figées, de 5 % à 70 % en masse d'ingrédients poudreux et de 2,5 % à 35 % en masse d'excipients.

2. Aliment pour animaux de compagnie selon la revendication 1,
où une couleur de la substance de base (10) et une couleur de la partie enrobée (20) sont différentes l'une de l'autre.

3. Aliment pour animaux de compagnie selon la revendication 2,
où l'aliment pour animaux de compagnie satisfait au moins une condition sélectionnée dans le groupe consistant en les conditions (a) à (d) suivantes dans l'espace chromatique CIE Lab,
(a) ΔL* (L* de la partie enrobée - L* de la substance de base) égal ou supérieur à 5,0,
(b) ΔE* (écart de couleur entre la partie enrobée et la substance de base) égal ou supérieur à 5,0,
(c) ΔC* (C* de la partie enrobée - C* de la substance de base) dans la plage de - 7,5 à -1,0 et
(d) ΔC* (C* de la partie enrobée - C* de la substance de base) dans la plage de 1,0 à 7,5.

4. Aliment pour animaux de compagnie selon l'une quelconque des revendications 1 à 3,
où une saveur de la substance de base (10) et une saveur de la partie enrobée (20) sont différentes l'une de l'autre.

5. Aliment pour animaux de compagnie selon l'une quelconque des revendications 1 à 4,
où une force de rupture de la substance de base (10) et une force de rupture de la partie enrobée (20) sont différentes l'une de l'autre.

6. Aliment pour animaux de compagnie selon la revendication 5,
où la force de rupture de la partie enrobée (20) est plus faible que la force de rupture de la substance de base (10).

7. Aliment pour animaux de compagnie selon l'une quelconque des revendications 1 à 6,
où la substance de base (10) présente au moins une partie évidée (11).

8. Aliment pour animaux de compagnie selon l'une quelconque des revendications 1 à 7,
où une proportion de l'aire occupée par la partie enrobée (20) rapportée à une aire de surface d'une totalité de l'aliment pour animaux de compagnie va de 5 % à 50 %.

9. Aliment pour animaux de compagnie selon l'une quelconque des revendications 1 à 8, comprenant :
une surface pourvue de la partie enrobée (20) ; et
une surface formée uniquement par une partie exposée, au niveau de laquelle la substance de base (10) est exposée.

10. Aliment pour animaux de compagnie selon l'une quelconque des revendications 1 à 9,
où un écart entre une surface de la substance de base (10) et un sommet de la partie enrobée (20) va de 0,1 à 2 mm.

11. Aliment pour animaux de compagnie en granulés, comprenant : une pluralité de granulés constituant l'aliment pour animaux de compagnie,
où la pluralité de granulés constituant l'aliment pour animaux de compagnie inclut une pluralité des aliments pour animaux de compagnie selon l'une quelconque des revendications 1 à 10 et
où une proportion de l'aire occupée par les parties enrobées (20) rapportée à une aire de surface d'une totalité des granulés constituant l'aliment pour animaux de compagnie va de 5 % à 50 %.

12. Méthode de production d'un aliment pour animaux de compagnie incluant une substance de base (10) qui est un granulé soufflé, dans lequel l'axe majeur et l'axe mineur de la substance de base (10) sont tous deux dans la plage de 3 à 30 mm et
une partie enrobée (20) qui nappe une partie de la substance de base (10) et qui a une forme linéaire, dans laquelle
une partie de la substance de base (10) est exposée et
une composition en termes de composants de la substance de base (10) et une composition en termes de composants de la partie enrobée (20) sont différentes l'une de l'autre,
la méthode comprenant :
une étape d'enrobage consistant à napper, au moyen d'un instrument à décorer, une partie de la substance de base (10) avec une composition formant une partie enrobée dont la composition est différente de celle de la substance de base (10) pour produire une partie enrobée (20) de forme linéaire ; et
une étape de solidification consistant à faire solidifier la composition formant la partie enrobée,
où la composition formant la partie enrobée contient de 5 % à 70 % en masse d'une huile et d'une graisse végétales, de 3 % à 40 % en masse d'une huile et d'une graisse extrêmement figées, de 5 % à 70 % en masse d'ingrédients poudreux et de 2,5 % à 35 % en masse d'excipients.
